# EUROPEAN PATENT APPLICATION

(11) **EP 4 664 736 A1**
(43) Date of publication of application: **17.12.2025**
(21) Application number: 24927584.3
(22) Date of filing: 01.07.2024
(51) Int. Cl.: H02K 41/02

(54) **ROTOR AND SLIDER INTEGRATED LINEAR MOTOR**

(30) Priority: 10.04.2024 CN 202410429461
(71) Applicant: Shenzhen Dynamikwell Technology Co., Ltd., Shenzhen, Guangdong 518000 (CN)
(72) Inventor: DAI, Jianfei, Shenzhen, Guangdong 518000 (CN); KE, Yuli, Shenzhen, Guangdong 518000 (CN); LI, Qingguang, Shenzhen, Guangdong 518000 (CN); DAI, Dishui, Shenzhen, Guangdong 518000 (CN); LIU, Ziwen, Shenzhen, Guangdong 518000 (CN)
(74) Representative: Agca Kizil, Tugce
(86) International application number: PCT/CN2024/102972
(87) International publication number: WO 2025/213593

(57) **Abstract**

This application discloses a linear motor with an integrated mover and sliding table, which includes a sliding assembly, a base, a magnetic rail, a sliding structure, and a guide rail, the magnetic rail is connected to the base, the sliding assembly is provided with a mover. The base is provided with a first surface facing the sliding assembly, and a recess opening on the first surface, the magnetic rail is filled in the recess, and the magnetic rail is provided with a second surface facing the sliding assembly, which is flush with the first surface; the guide rail is provided on an outer side wall of the base, located on one side of the first surface away from the sliding assembly.

## Description

The present disclosure claims priority of the Chinese Patent application No. CN2024104294614 entitled "A LINEAR MOTOR WITH AN INTEGRATED MOVER AND SLIDING TABLE" filed on April 10, 2024, to the China National Intellectual Property Administration, the entire contents of which are incorporated herein by reference.

### FIELD

This application relates to the field of linear motor module, and in particularly to a linear motor with an integrated mover and sliding table.

### BACKGROUND

The embedded guide rail linear motor module is a transmission device that integrates the guide rail into the base of the linear motor module. It combines the characteristics of traditional linear motors and ball screw modules. The working principle is the same as that of general linear motors, which all drive the mover to make linear motion on the guide rail through electromagnetic force.

In existing embedded guide rail linear motor modules, the base can accommodate the mover of the motor through the provided concave cavity to make the structure compact. The two sides of the motor can achieve linear motion through the steel rail on both sides of the base. However, during the operation of the embedded guide rail linear motor module, the base is prone to deformation due to the magnetic attraction force of the motor, thereby affecting the precision and stability of the module.

### SUMMARY

To address the aforementioned issues, the objective of this application is to provide a linear motor with an integrated mover and sliding table, which can reduce the deformation of the base caused by magnetic attraction force.

To achieve the aforementioned objective, the technical solution of this application is as follows:
This application provides a linear motor with an integrated mover and sliding table, including: a sliding assembly, a base, a magnetic rail, a sliding structure, and a guide rail, the magnetic rail is connected to the base, the sliding assembly includes a mover, and the mover is provided opposite to the magnetic rail;
the base is provided with a first surface facing the sliding assembly, and a recess opening on the first surface, the magnetic rail is filled in the recess, and the magnetic rail is provided with a second surface facing the sliding assembly, which is flush with the first surface; the guide rail is provided on an outer side wall of the base, located on one side of the first surface away from the sliding assembly, the sliding structure is provided on the sliding assembly and slidably connected to the guide rail, so that the sliding assembly slides relative to the base.

In the linear motor with an integrated mover and sliding table of this application, the sliding assembly includes the mover and a sliding table, and the mover and the sliding table are integrally potted together.

In the linear motor with an integrated mover and sliding table of this application, the magnetic rail is fixedly connected to the base.

In the linear motor with an integrated mover and sliding table of this application, the outer side wall of the base is provided with a groove, and the guide rail is embedded in the groove.

In the linear motor with an integrated mover and sliding table of this application, the sliding assembly is provided with first protrusions on both sides facing the base, a mounting groove is provided in the first protrusion, the mounting grooves on both sides are all embedded with the sliding structure, the outer side walls of both sides of the base are all provided with the guide rail, and the two sliding structures correspond to the two guide rails respectively.

In the linear motor with an integrated mover and sliding table of this application, the sliding structure includes a recirculator, the recirculator is provided with a plurality of rolling balls, the guide rail is provided with a sliding groove, and the plurality of rolling balls are in rolling connection with the sliding groove.

In the linear motor with an integrated mover and sliding table of this application, an oil cup communicated with the mounting groove is provided on the side wall of the sliding assembly, so as to lubricate the sliding between the sliding structure and the guide rail.

In the linear motor with an integrated mover and sliding table of this application, a connector for connecting a power cable is further provided on the side wall of the sliding assembly, and the connector is connected to the mover.

In the linear motor with an integrated mover and sliding table of this application, the sliding assembly includes the mover and a sliding table, an accommodation groove is provided on one side of the sliding table facing the base, and the mover is located in the accommodation groove.

In the linear motor with an integrated mover and sliding table of this application, a heat dissipation fin is provided on the side wall of the sliding table located around the accommodation groove, or the sliding table is provided with a heat dissipation hole located around the accommodation groove.

In the linear motor with an integrated mover and sliding table of this application, it further includes two end covers and a cover plate, the front and rear ends of the base are each provided with the end cover, and the end cover is fixedly connected to the base, the cover plate is connected between the two end covers, a sliding cavity is formed between the cover plate and the base, and the sliding assembly is slidably provided in the sliding cavity.

In the linear motor with an integrated mover and sliding table of this application, the sliding assembly is provided with a second protrusion and two limiting platforms, which are away from the base, the two limiting platforms are respectively provided on two sides of the second protrusion, and a limiting groove is formed between the two limiting platforms and the second protrusion, limiting plates extend downward from two sides of the cover plate, and the two limiting plates are respectively provided in the two limiting grooves, the limiting plates and the limiting grooves slide relative to each other.

In the linear motor with an integrated mover and sliding table of this application, a cushioning pad is further provided on an inner side of the end cover.

In the linear motor with an integrated mover and sliding table of this application, a photoelectric sensing sheet is further provided on the side wall of the sliding assembly, and a photoelectric sensor cooperated with the photoelectric sensing sheet is provided on the side wall of the base, the photoelectric sensing sheet corresponds to the photoelectric sensor in position.

In the linear motor with an integrated mover and sliding table of this application, a linear encoder is further provided on the side wall of the sliding assembly, and a grid scale cooperated with the linear encoder is provided on the side wall of the base.

In the linear motor with an integrated mover and sliding table of this application, the cavity structure of the base of the traditional linear motor module has been optimized. The first surface of the base is flush with the second surface of the magnetic rail, forming a non-cavity-type integrated dynamic structure. In this way, the side walls of the base on both sides of the recess are shortened. When the guide rail is subjected to the force exerted by the sliding assembly through the sliding structure and exerts an inward force on the outer side wall of the base, it is difficult to deform because the force arm becomes shorter. Moreover, since the magnetic rail is filled in the recess and makes direct contact with the side walls of the base on both sides of the recess without any gap, when the guide rail is subjected to the force exerted by the sliding assembly through the sliding structure and exerts an inward force on the outer side wall of the base, the magnetic rail and the base, as a whole, can support the side walls of the base on both sides of the recess, thereby preventing deformation of the side walls of the base on both sides of the recess. Therefore, the linear motor with an integrated mover and sliding table provided in this application can significantly reduce the deformation of the base caused by magnetic attraction force, thereby ensuring the precision and stability of the linear motor's operation. In practical applications, this ensures the accurate and stable operation of the equipment, prevents equipment failure, and consequently ensures production efficiency.

### BRIEF DESCRIPTION OF THE DRAWINGS

In order to clearly illustrate the technical solutions in the embodiments of this application or the prior art, the following will briefly introduce the drawings used in the description of the embodiments or the prior art. Apparently, the drawings in the following description are some embodiments of this application. For those of ordinary skill in the art, without making any creative efforts, other drawings can be obtained based on these drawings.
FIG. 1 is a structural schematic diagram of the embedded guide rail linear motor module in the prior art.
FIG. 2 is a structural schematic diagram of the linear motor with an integrated mover and sliding table in an embodiment of this application.
FIG. 3 is an exploded view of the linear motor with an integrated mover and sliding table in an embodiment of this application.
FIG. 4 is an exploded view of the mover of the linear motor with an integrated mover and sliding table in an embodiment of this application.
FIG. 5 is a structural schematic diagram of the base of the linear motor with an integrated mover and sliding table in an embodiment of this application.
FIG. 6 is a sectional view of the linear motor with an integrated mover and sliding table in an embodiment of this application.

### Reference numerals in the drawings:

10,sliding assembly;
11, sliding table;
11a, accommodation groove;
11b, limiting groove;
111, first protrusion;
111a, mounting groove;
1111, mounting member;
112, second protrusion;
113, limiting platform;
114, heat dissipation fin;
115, heat dissipation hole;
116, third surface;
12, mover;
121, protruding part;
122, fourth surface;
13, oil cup;
14, connector;
20, base;
20a, recess;
20b, groove;
21, first surface;
30, magnetic rail;
31, second surface;
50, guide rail;
50a, sliding groove;
60, sliding structure;
61, recirculator;
70, end cover;
71, cushioning pad;
80, cover plate;
81, limiting plate;
91, photoelectric sensing sheet;
92, photoelectric sensor;
93, linear encoder;
94, grid scale.

### DETAILED DESCRIPTION

The technical solution of embodiments of this application is clearly and completely described in detail in connection with the accompanying drawings. Apparently, described embodiments are some embodiments of this application, not all embodiments. Based on embodiments of this application, all other embodiments obtained by those of ordinary skill in the art without creative efforts are within the scope of this application.

It should be noted that all directional references (such as up, down, left, right, front, rear, etc.) in the embodiments of this application are only used to explain the relative positional relationships and motion conditions of various components in a specific posture. If the specific posture changes, then the directional references will also change accordingly.

It should also be noted that when an element is referred to as being "fixed to" or "provided on" another element, it may be directly on the other element or there may be an intermediate element. When an element is referred to as being "connected to" another element, it may be directly connected to the other element or indirectly connected to the other element through an intermediate element.

Furthermore, in this application, descriptions involving "first," "second," etc., are used solely for the purpose of description and should not be construed as indicating or implying relative importance or specifying the number of technical features indicated. Thus, features designated as "first" and "second" may explicitly or implicitly include at least one such feature. Additionally, technical solutions from different embodiments can be combined, but only on the basis that they can be implemented by a person of ordinary skill in the art. If the combination of technical solutions results in contradictions or is not feasible, such combinations should be considered non-existent and not within the scope of protection claimed in this application.

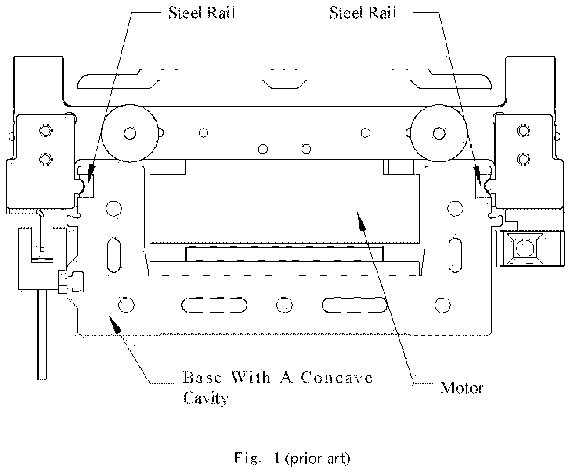

As shown in Figure 1, in the traditional embedded guide rail linear motor module, the base has a concave cavity. The mover and stator of the motor are both placed inside the cavity, and the sliding table connected to the mover is slidably connected to the steel rails on the outer side walls of the cavity of the base. During the operation of the embedded guide rail linear motor module, the mover and stator generate a magnetic field. Under the interaction between the mover and the stator, the sliding table exerts a force towards the base. This force is then transmitted to the steel rails, generating a component force towards the center of the base and a component force towards the bottom of the base. The side walls of the base on both sides of the cavity are subjected to the force applied by the steel rails. Since the cavity needs to accommodate both the stator and the mover, the side walls of the base on both sides of the cavity are relatively long. Moreover, because there is a gap between the mover and the cavity, when subjected to the force from the steel rails towards the center of the base, the side walls of the base on both sides of the cavity are highly susceptible to deformation. Once deformation occurs, the structure of the cavity itself changes, resulting in reduced precision of the module's linear motion and decreased stability of the module. It is important to note that in practical applications, this instability can lead to inaccurate operation of the equipment and may even cause equipment failure, thereby affecting production efficiency.

Moreover, the cavity space of the traditional embedded module needs to accommodate both the mover and the stator, and there must also be a gap between the cavity and the mover. As a result, the cavity space is relatively large, which leads to a larger operating clearance in the traditional embedded module. The larger the clearance, the greater the noise generated. This noise not only affects the normal operation of the equipment but also, to a certain extent, disrupts the tranquility of the usage environment, causing unnecessary disturbances.

Furthermore, since the sliding structure of the sliding table is close to the mover, during the operation of the embedded guide rail linear motor module, a magnetic field is generated between the mover and the stator. The rolling balls on the steel rails cut through the magnetic induction lines during operation, causing electrical corrosion between the steel rails and the rolling balls. This, in turn, affects the precision and stability of the linear motor module's motion.

To address these issues, the embodiments of this application provide a linear motor with an integrated mover and sliding table, which can significantly reduce the deformation of the base caused by the electromagnetic attraction force on the guide rail. This, in turn, ensures the precision and stability of the linear motor's operation.

The following is a detailed description of some embodiments of this application in conjunction with the accompanying drawings. The embodiments and the features therein may be combined with each other without conflict.

To achieve the above-mentioned objectives, the technical solution of this application is as follows:

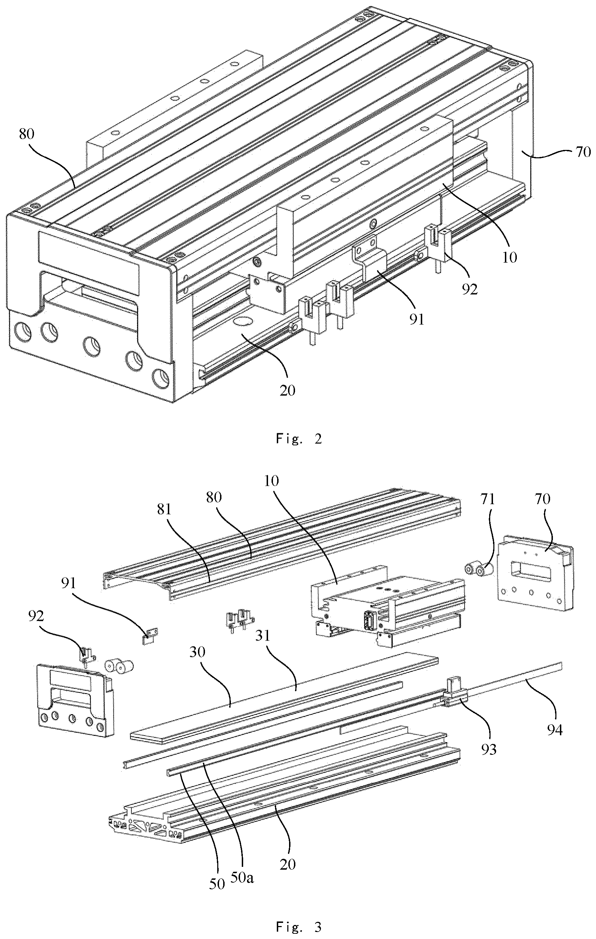

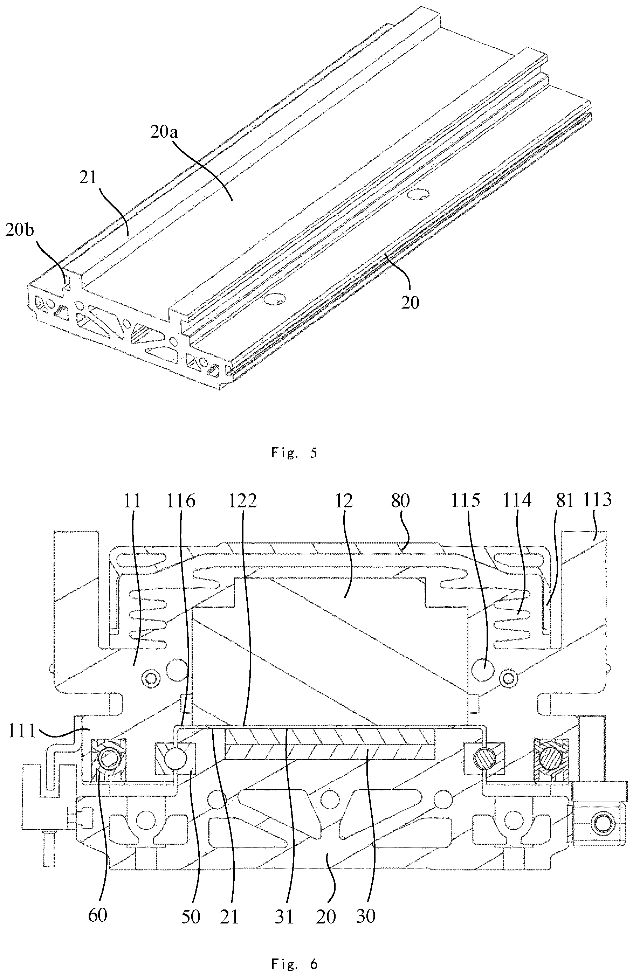

As shown in Figures 2 and 6, this embodiment provides a linear motor with an integrated mover and sliding table, which includes a sliding assembly 10, a base 20, a magnetic rail 30, a sliding structure 60, and a guide rail 50. The magnetic rail 30 is connected to the base 20. The sliding assembly 10 includes a mover 12, which is provided opposite to the magnetic rail 30. The base 20 is provided with a first surface 21 facing the sliding assembly 10, and a recess 20a opening on the first surface 21. The magnetic rail 30 is filled in the recess 20a, and the magnetic rail 30 is provided with a second surface 31 facing the sliding assembly 10, which is flush with the first surface 21. The guide rail 50 is provided on an outer side wall of the base 20, located on one side of the first surface 21 away from the sliding assembly 10. The sliding structure 60 is provided on the sliding assembly 10 and slidably connected to the guide rail 50, so that the sliding assembly 10 slides relative to the base 20.

It should be noted that during the operation of the linear motor, a magnetic field will be generated between the mover 12 and the magnetic rail 30, and the mover 12 will be subjected to the magnetic attraction force of the magnetic rail 30. As a result, the entire sliding assembly 10 will be subjected to an attraction force towards the base. The sliding assembly 10 will then exert a force on the base 20 through the sliding structure 60, for example, by exerting a force to the guide rail 50 through the rolling balls within the sliding structure 60. This force has component forces towards the center of the base 20 and towards the bottom of the base 20, and the outer side wall of the base 20 will thereby be subjected to an inward force.

In the embodiments of this application, the cavity structure of the base of the traditional linear motor module has been optimized. The first surface 21 of the base 20 is flush with the second surface 31 of the magnetic rail 30, forming a non-cavity-type integrated dynamic structure. In this way, the side walls of the base 20 on both sides of the recess 20a are shortened. When the guide rail 50 is subjected to the force exerted by the sliding assembly 10 through the sliding structure 60 and exerts an inward force on the outer side wall of the base 20, it is difficult to deform because the force arm becomes shorter. Moreover, since the magnetic rail 30 is filled in the recess 20a and makes direct contact with the side walls of the base 20 on both sides of the recess 20a without any gap, when the guide rail 50 is subjected to the force exerted by the sliding assembly 10 through the sliding structure 60 and exerts an inward force on the outer side wall of the base 20, the magnetic rail 30 and the base 20, as a whole, can support the side walls of the base 20 on both sides of the recess 20a, thereby preventing deformation of the side walls of the base 20 on both sides of the recess 20a. Therefore, the linear motor with an integrated mover and sliding table provided in this application can significantly reduce the deformation of the base 20 caused by magnetic attraction force, thereby ensuring the precision and stability of the linear motor's operation. In practical applications, this ensures the accurate and stable operation of the equipment, prevents equipment failure, and consequently ensures production efficiency.

Moreover, it should be noted that the guide rail 50 is typically made of a steel rail with sufficient strength to ensure stable support for the sliding movement of the sliding assembly 10 relative to the base 20. During the operation of the linear motor, a magnetic field is generated between the mover 12 and the magnetic rail 30, which exerts a magnetic attraction force on the sliding structure 60, for example, on the rolling balls within it, thereby affecting the smoothness of the rolling balls' operation within the guide rail 50. In this embodiment, since the guide rail 50 is located on one side of the first surface 21 that is away from the sliding assembly 10, the sliding structure 60 is to some extent distanced from the magnetic field between the mover 12 and the magnetic rail 30. The mover 12 and the magnetic rail 30 reduce the magnetic attraction force on the sliding structure 60, further minimizing the impact of the magnetic attraction force on the smooth operation between the sliding structure 60 and the guide rail 50.

Furthermore, in the embodiment of this application, since the magnetic rail 30 is filled in the recess 20a and the first surface 21 of the base 20 is flush with the second surface 31 of the magnetic rail 30, there is no extra space in the recess 20a. This results in a reduced operating clearance of the entire linear motor. On one hand, it makes the structure of the linear motor more compact. On the other hand, it also reduces the noise generated during the operation of the linear motor, ensuring its normal operation and making the usage environment quieter and more comfortable.

Moreover, during the operation of the linear motor in the embodiment of this application, a magnetic field is generated between the mover 12 and the magnetic rail 30. Since the sliding structure 60 is slidably connected to the guide rail 50, and the guide rail 50 is located on the outer side wall of the base 20, the guide rail 50 and the sliding structure 60 are positioned on one side that is away from the area between the mover 12 and the magnetic rail 30. As a result, the sliding structure 60 and the guide rail 50 are distanced from the magnetic field, weakening the effect caused by the sliding structure 60 and the guide rail 50 cutting the magnetic field. Therefore, the electrical corrosion on the sliding structure 60 and the guide rail 50 can be reduced. This ensures the stable and reliable sliding connection of the sliding structure 60 with the guide rail 50, thereby ensuring the precision and stability of the linear motor's operation.

As shown in Figure 5, in the embodiment of this application, a part of the guide rail 50 is at least located on one side of the bottom of the recess 20a facing the first surface 21. In this way, the guide rail 50 will not be too far away from the sliding assembly 10, and the sliding structure 60 will not be too deeply embedded into the base 20. As a result, the overall linear motor is more streamlined and compact, without occupying too much space.

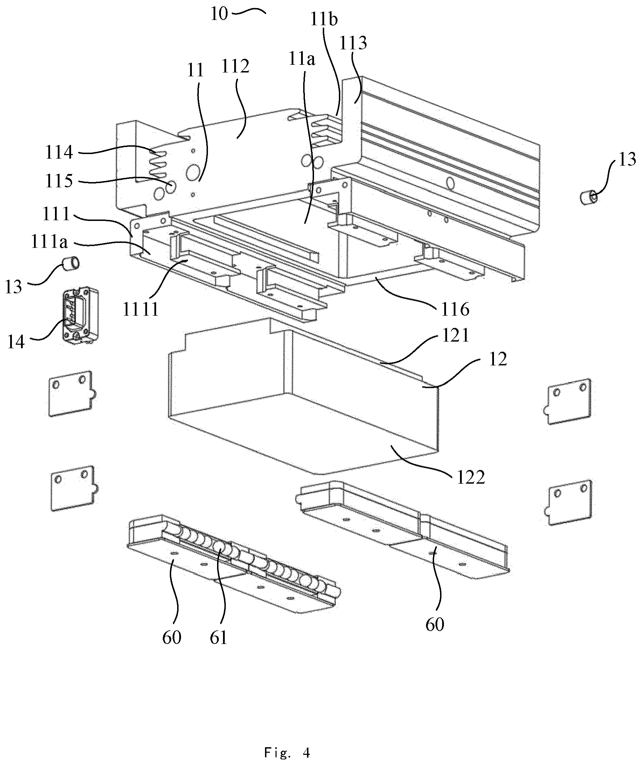

As shown in Figure 4, in the embodiment of this application, the sliding assembly 10 includes the mover 12 and the sliding table 11, which are integrally potted together. This eliminates the need for complicated potting molds, optimizes the production process, and reduces costs. This construction allows the sliding table 11 and the mover 12 to form a whole, preventing any relative displacement or error between the two. This ensures the precision and stability of the linear motor during operation, thereby ensuring the accurate and stable operation of the equipment connected to the sliding table 11.

As shown in Figures 3 and 5, in the embodiment of this application, the magnetic rail 30 is fixedly connected to the base 20. This construction allows the magnetic rail 30 and the base 20 to form a whole, preventing any relative displacement or error between the two. As a result, the sliding assembly 10, which is slidably connected to them, can operate accurately and stably, ensuring the precision and stability of the linear motor during operation. For example, the magnetic rail 30 can be fixedly connected to the base 20 by means of screws or adhesive. Of course, in other embodiments, the magnetic rail 30 and the base 20 may also be integrally potted together to optimize the production process and reduce costs.

As shown in Figures 3 and 5, in the embodiment of this application, the outer side wall of the base 20 is provided with a groove 20b, and the guide rail 50 is embedded in the groove 20b. In this way, the guide rail 50 can be securely mounted on the outer side wall of the base 20, thereby ensuring the stability and reliability of the sliding movement of the sliding assembly 10. Moreover, the embedded guide rail 50 not only avoids occupying additional space of the linear motor but also can be protected by the recessed structure of the base 20, enhancing the stability and reliability of the linear motor. Of course, in other embodiments, the guide rail 50 may also be directly fixed to the surface of the outer side wall of the base 20.

As shown in Figures 4 and 6, in the embodiment of this application, the sliding assembly 10 is provided with first protrusions 111 on both sides facing the base 20, a mounting groove 111a is provided in the first protrusion 111, the mounting grooves 111a on both sides are all embedded with the sliding structure 60, the outer side walls of both sides of the base 20 are all provided with the guide rail 50, and two sliding structures 60 correspond to two guide rails 50 respectively. It should be noted that each sliding structure 60 is slidably connected to the corresponding guide rail 50. Since the guide rails 50 are located on the outer side walls of both sides of the base 20, after two sliding structures 60 are slidably connected to the guide rails 50 on both sides, the protrusions on both sides of the sliding assembly 10 will be sandwiched between the two sides of the base 20. In this way, the sliding assembly 10 can slide stably relative to the base 20. Moreover, the embedded sliding structure 60 not only avoids occupying additional space of the linear motor but also can be protected by the first protrusion 111, enhancing the stability and reliability of the linear motor. For example, the sliding table 11 has a first protrusion 111 on each side, and the mover 12 is located between the first protrusions 111 on both sides.

As shown in Figures 4 and 6, in the embodiment of this application, the sliding structure 60 includes a recirculator 61, the recirculator 61 is provided with a plurality of rolling balls, the guide rail 50 is provided with a sliding groove 50a, and the plurality of rolling balls are in rolling connection with the sliding groove 50a. It should be noted that the recirculator 61 has a closed recirculating channel in the shape of a loop, and the plurality of rolling balls are located within this recirculating channel. The part of the recirculating channel facing the sliding groove 50a is in communication with the sliding groove 50a. As the plurality of rolling balls roll within the recirculating channel, they also roll along the sliding groove 50a. In this way, the sliding friction between the sliding structure 60 and the guide rail 50 can be greatly reduced, which is conducive to the sliding of the sliding assembly 10 relative to the base 20, thereby improving the precision and stability of the linear motor's operation. For example, the diameter of the rolling ball is adapted to the diameter of the rolling space enclosed between the recirculating channel and the sliding groove 50a, further ensuring the precision and stability of the linear motor's operation.

As shown in Figures 4 and 6, in the embodiment of this application, each mounting groove 111a opens towards the middle part of the sliding assembly 10 and the side away from the sliding assembly 10. The wall of the mounting groove 111a, which is away from the sliding assembly 10, protrudes with a mounting member1111. The middle part of the recirculator 61 is provided with a fixing groove. When mounting the recirculator 61 into the mounting groove 111a, the recirculator 61 can be inserted into the mounting groove 111a via the opening formed on the side of the mounting groove 111a that is away from the sliding assembly 10, and the mounting member1111 is placed into the fixing groove. By locking the pressure plate and the end of the mounting member1111 together, the recirculator 61 can be securely mounted in the mounting groove 111a. For example, the pressure plate and the mounting member1111 can be locked together with screws. For example, each mounting groove 111a is provided with a plurality of mounting members 1111 that are spaced apart in the direction of movement of the sliding assembly 10, for fixing a plurality of recirculators 61 that are arranged in parallel, ensuring that the sliding assembly 10 can slide stably relative to the base 20. In this way, the base 20 can be compatible with sliding assemblies 10 with different sizes, meeting the application requirements for different thrusts and sizes. For example, each mounting groove 111a is provided with two fixing members to mount two recirculators 61 that are arranged in parallel.

As shown in Figure 4, in the embodiment of this application, an oil cup 13 that is in communication with the mounting groove 111a is provided on the side wall of the sliding assembly 10, so as to lubricate the sliding between the sliding structure 60 and the guide rail 50. Lubricating grease can be injected between the sliding structure 60 and the guide rail 50 through the oil cup 13 to achieve lubrication, reduce the friction between the sliding structure 60 and the guide rail 50, and thereby ensure the stable and smooth operation of the sliding assembly 10 relative to the base 20. In this embodiment, an oil hole that communicates with the mounting groove 111a is provided on the outer side of the sliding assembly 10, and the oil cup 13 is mounted in the oil hole from the outer side of the sliding assembly 10 to inject grease between the sliding structure 60 and the guide rail 50. For example, the oil hole communicates with the wall of the mounting groove 111a that is away from the sliding assembly 10 and faces the recirculating channel of the recirculator 61. The lubricating grease can flow into the recirculating channel through the oil hole and be brought between the sliding structure 60 and the guide rail 50 by the rolling of the rolling balls, for example, to lubricate the rolling balls of the sliding structure 60, so as to lubricate the sliding between the sliding structure 60 and the guide rail 50. For example, the side wall of the sliding table 11 is provided with an oil cup 13 that is in communication with the mounting groove 111a, so as not to affect the operation of the mover 12.

As shown in Figures 5 and 6, in the embodiment of this application, the middle part of the base 20 protrudes to form a cavity plate. The first surface 21 and the recess 20a are located on one side of the cavity plate facing the sliding assembly 10. The guide rail 50 is provided on the outer side wall of the cavity plate adjacent to the first surface 21. The base 20 has sliding accommodation grooves on both sides of the cavity plate, and the first protrusion parts 111 on both sides of the sliding assembly 10 are placed in the sliding accommodation grooves. In this way, the overall linear motor is further streamlined and compact, without occupying too much space. Moreover, the operating clearance of the entire linear motor is further reduced, the noise generated during the operation of the linear motor is reduced, the normal operation of the linear motor is ensured, and the usage environment is made quieter and more comfortable.

As shown in Figure 4, in the embodiment of this application, the side wall of the sliding assembly 10 is also provided with a connector 14 for connecting the power cable, and the connector 14 is connected to the mover 12. It should be noted that the mover 12 is provided with a coil inside, which can generate a magnetic field when electrified. The magnetic field drives the mover 12 to perform linear motion relative to the magnetic rail 30, thereby realizing the sliding of the sliding assembly 10 relative to the base 20. In this embodiment, the connector 14 can be connected to a power connector to supply power to the coil inside the mover 12. For example, the connector is a plug-in connector, so that the connector 14 can quickly connect to and disconnect from the power supply by plugging and unplugging, which is more convenient to use.

It should be noted that for traditional linear motor modules, in order to power the mover, it is generally necessary to drill a hole in the sliding table connected to the mover. The wire leading out from the mover passes through the hole in the sliding table to connect with the external power supply. Therefore, if the length of the wire leading out from the mover is various, it is also necessary to additionally manufacture movers with the corresponding wire lengths, which is not conducive to the pre-storage and production of motors with various wire lengths. In addition, since the wire leading out from the mover extends out of the sliding table, it is also more inconvenient to replace and maintain the sliding table and mover, and it is easy to damage the sliding table or motor. However, in the embodiment of this application, the connector 14 is directly provided on the side wall of the sliding assembly 10. By connecting with the power connector, power supply can be realized. There is no need to consider the length and setting method of the wire leading out from the mover 12, which makes the production of the sliding assembly 10 standardized and unified. This is beneficial for the pre-storage and production of the sliding assembly 10. Moreover, when replacing and maintaining the sliding assembly 10, it is also more convenient and will not be affected by the wire passing through. This simplifies the production process and maintenance procedures, greatly improves production efficiency, and provides strong support for the interchangeability of the sliding assembly 10.

For example, in the sliding assembly 10, the mover 12 and the sliding table 11 are integrally formed. The wire used to connect with the mover 12 in the connector 14 passes through the sliding table 11 to connect with the mover 12. Of course, in some other examples, the sliding table 11 is provided with a first electrical contact, and the mover 12 is provided with a second electrical contact. The first electrical contact is connected to the connector 14. After the mover 12 is connected to the sliding table 11, the second electrical contact is connected to the first electrical contact, and the mover 12 is thereby connected to the connector 14. In this way, it is convenient to replace and maintain the sliding table 11 and the mover 12 separately.

As shown in Figures 4 and 6, in the embodiment of this application, one side of the sliding table 11 facing the base 20 is provided with an accommodation groove 11a, in which the mover 12 is located. Since the magnetic rail 30 is filled in the recess 20a and the first surface 21 is flush with the second surface 31, placing the mover 12 in the accommodation groove 11a can greatly reduce the gap between the sliding table 11 and the base 20. This makes the structure of the linear motor more compact, reduces the noise generated during the operation of the linear motor, ensures its normal operation, and makes the usage environment quieter and more comfortable. Moreover, when integrally potting the sliding table 11 and the mover 12, since the mover 12 is embedded in the accommodation groove 11a, there is no need for complicated molds to form the sliding table 11 and the mover 12 separately. This optimizes the production process and reduces costs.

As shown in Figures 4 and 6, in the embodiment of this application, the sliding table 11 has a third surface 116 facing the first surface 21, and the mover 12 has a fourth surface 122 facing the second surface 31. The third surface 116 is flush with the fourth surface 122. In this way, when the mover 12 is opposite to and interacts with the magnetic rail 30, the gap between the first surface 21 and the third surface 116 is consistent with the gap between the second surface 31 and the fourth surface 122. This can minimize the gap between the sliding table 11 and the base 20 to the greatest extent, making the structure of the linear motor more compact. As a result, the noise generated during the operation of the linear motor is reduced, ensuring its normal operation and making the usage environment quieter and more comfortable.

In this embodiment, the accommodation groove 11a has a stepped groove located at the bottom of the accommodation groove 11a, and the mover 12 has a protruding part 121. The protruding part 121 is placed in the stepped groove and filled in the stepped groove. In this way, the mover 12 can be further securely embedded in the accommodation groove 11a.

As shown in Figures 4 and 6, in the embodiment of this application, a heat dissipation fin 114 is provided on the side wall of the sliding table 11 located around the accommodation groove 11a. Since the mover 12 is placed in the accommodation groove 11a, the heat generated by the mover 12 can be transferred along the wall of the accommodation groove 11a to the heat dissipation fin 114. The heat dissipation fin 114 can effectively increase the heat dissipation area of the sliding assembly 10, improve the heat dissipation efficiency of the sliding assembly 10, and ensure the continuous and stable operation of the linear motor. For example, a second protrusion 112 corresponding to the accommodation groove 11a is provided on one side of the sliding table 11 that is away from the opening of the accommodation groove 11a, and the heat dissipation fin 114 is arranged on the side wall around the second protrusion 112. Specifically, the heat dissipation fin 114 is located on both sides of the accommodation groove 11a and on both sides of the stepped groove, and extends along the direction of movement of the sliding table 11 to both ends of the sliding table 11, so as to fully dissipate heat from the sliding assembly 10.

As shown in Figures 4 and 6, in the embodiment of this application, the sliding table 11 is provided with a heat dissipation hole 115 located around the accommodation groove 11a. The heat dissipation hole 115 can be connected to air pipes and water pipes, supporting both air cooling and water cooling methods, thus providing a more efficient heat dissipation solution for the sliding assembly 10. In this way, the temperature rise of the sliding assembly 10 can be effectively controlled, ensuring the stability and reliability of the linear motor during high-load operation and providing users with a safer and more reliable dynamic solution. For example, the heat dissipation hole 115 is located on both sides of the accommodation groove 11a and extends along the direction of movement of the sliding table 11 to both ends of the sliding table 11, so as to fully dissipate heat from the sliding assembly 10.

It should be noted that the above-mentioned heat dissipation fin 114 and the heat dissipation hole 115 can be set according to needs, either one of them can be chosen, or they can be set at the same time, so as to better dissipate heat from the sliding assembly 10. Moreover, since the mover 12 is the main heat-generating component, placing the heat dissipation fin 114 and/or the heat dissipation hole 115 around the mover 12 can fully dissipate the heat from the mover 12.

As shown in Figures 3, 5, and 6, in the embodiment of this application, the linear motor also includes two end covers 70 and a cover plate 80. The front and rear ends of the base 20 are each provided with the end cover 70. The end cover 70 is fixedly connected to the base 20. The cover plate 80 is connected between the two end covers 70. A sliding cavity is formed between the cover plate 80 and the base 20, and the sliding assembly 10 is slidably provided in the sliding cavity. The end covers 70 can limit the sliding position of the sliding assembly 10 in the direction of movement, ensuring the stable sliding of the sliding assembly 10 on the base 20 and preventing it from detaching from the base 20 in the direction of movement. On one hand, the cover plate 80 can protect the base 20, the magnetic rail 30 and the sliding assembly 10; on the other hand, the cover plate 80 can prevent the sliding assembly 10 from detaching from the base 20 in the vertical direction, ensuring the stable sliding of the sliding assembly 10 on the base 20.

As shown in Figures 3 and 6, in the embodiment of this application, the sliding assembly 10 is provided with a second protrusion 112 and two limiting platforms 113, which are away from the base 20. Two limiting platforms 113 are respectively provided on two sides of the second protrusion 112, and a limiting groove 11b is formed between two limiting platforms 113 and the second protrusion 112. Limiting plates 81 extend downward from two sides of the cover plate 80, and two limiting plates 81 are respectively provided in two limiting grooves 11b. The limiting plates 81 and the limiting grooves 11b slide relative to each other. In this application, the cover plate 80 adopts a concave-shaped encapsulated structure. On one hand, it can significantly enhance the strength of the cover plate 80. On the other hand, it can protect the linear motor, effectively preventing foreign objects from falling into the module, and enhancing the reliability and stability of the system. For example, the cover plate 80 can cover the magnetic rail 30, the parts of the base 20 on both sides of the magnetic rail 30, and a part of the sliding assembly 10, thereby effectively protecting the linear motor. For example, the cover plate 80 and limiting plates 81 on both sides are arranged around the heat dissipation fin 114 to prevent the heat dissipation fin 114 from contacting the external environment, and thus can also protect the heat dissipation fin 114.

As shown in Figure 3, in the embodiment of this application, a cushioning pad 71 is also provided on the inner side of the end cover 70. When the sliding assembly 10 slides to the front and rear ends of the base 20, the cushioning pad 71 can contact the sliding assembly 10 to prevent it from colliding with the end cover 70, thereby effectively protecting the sliding assembly 10.

As shown in Figures 2 and 3, in the embodiment of this application, a photoelectric sensing sheet 91 is also provided on the side wall of the sliding assembly 10. For example, the photoelectric sensing sheet 91 is provided on one side of the sliding table 11. A photoelectric sensor 92 cooperated with the photoelectric sensing sheet 91 is provided on the side wall of the base 20. The photoelectric sensing sheet 91 corresponds to the photoelectric sensor 92 in position to provide position feedback. As the sliding assembly 10 slides relative to the base 20, the photoelectric sensing sheet 91 will pass through the sensing slot of the photoelectric sensor 92. The photoelectric sensor 92 can then sense the position of the sliding assembly 10 and feed this information back to the control end. Based on the position information of the sliding assembly 10, the control end can control the sliding assembly 10. For example, the photoelectric sensor 92 is located on both sides of the base 20 in the front and rear direction to provide position information when the sliding assembly 10 slides to the front and rear ends of the base 20. In this way, the sliding position of the sliding assembly 10 can be limited. For example, after sliding to the front and rear ends of the base 20, the control end can control the mover 12, and thereby control the sliding assembly 10 to stop sliding further, preventing the sliding assembly 10 from colliding with the end cover 70, and effectively protecting the sliding assembly 10.

As shown in Figure 3, in the embodiment of this application, a linear encoder 93 is also provided on the side wall of the sliding assembly 10. For example, the linear encoder 93 is provided on another side of the sliding table 11. A grid scale 40 cooperated with the linear encoder 93 is provided on the side wall of the base 20 to provide position feedback for the linear motion of the sliding assembly 10. The position information can be fed back to the control end. In this way, the control end can accurately know the current position of the sliding assembly 10, so as to precisely control the position of the sliding assembly 10 by controlling the mover 12, thereby achieving precise operations.

In the embodiment of this application, the same base can be provided with multiple sliding assemblies 10. That is to say, the linear motor can support the operation of multiple sliding assemblies 10 at the same time, thereby supporting the operation of multiple devices simultaneously and thus greatly improving production efficiency. It should be noted that the sizes of the multiple sliding assemblies 10 can be different or the same to meet the application requirements for different thrusts and sizes.

In the embodiments of this application, the linear motor offers the following advantages over the prior art:
1. Integrated Development: The sliding assembly 10, built on standardized and modular design principles with integrated development, ingeniously integrates the dynamic source, guiding mechanism, lubrication system, and heat dissipation structure to form a compact and highly efficient system architecture.
2. High precision, high stability, and low noise: The linear motor with an integrated mover and sliding table delivers performance comparable to traditional linear motors, and it also has a feature of high precision and rapid response. Compared with the prior art, structural optimizations address issues such as electrical corrosion caused by magnetic fields and noise from cavity structures, while also mitigating structural deformation of cavity structures under magnetic attraction force.
3. Interchangeability: The base 20 and guide rail 50 are compatible with sliding assemblies 10 with varying lengths and heights, meeting the application requirements for different thrusts and sizes.
4. Convenience in production and maintenance: By placing the mover in the accommodation groove 11a and employing integrated potting technology for the sliding table 11 and mover 12, the production process is optimized, eliminating complex potting molds. External power cables connect directly with the plug-in connector to supply power to the mover 12 of the sliding assembly 10, reducing the inventory requirements for different styles and types of the sliding assembly 10, and making production inventory management more simple and efficient.
5. Cost efficiency: Base on the embedded structure of the magnetic rail 30 and mover 12, manufacturing costs for the base 20 and sliding assembly 10 can be reduced, minimizes mold investments, enhances cost-performance ratio, and reduces overall expenses.

The aforementioned descriptions are merely preferred embodiments of this application, but are not intended to limit this application. Any variation, equivalent replacement, or improvements , etc. made within the spirit and principles of this application shall fall within the protection scope of this application.

## Claims

1. A linear motor with an integrated mover and sliding table, comprising:
a sliding assembly, the sliding assembly comprises a mover;
a base, the base is provided with a first surface facing the sliding assembly, and a recess opening on the first surface;
a magnetic rail, the magnetic rail is connected to the base, the mover is provided opposite to the magnetic rail, the magnetic rail is filled in the recess, and the magnetic rail is provided with a second surface facing the sliding assembly, which is flush with the first surface;
a guide rail, the guide rail is provided on an outer side wall of the base, located on one side of the first surface away from the sliding assembly; and
a sliding structure, the sliding structure is provided on the sliding assembly and slidably connected to the guide rail, so that the sliding assembly slides relative to the base.

2. A linear motor with an integrated mover and sliding table according to claim 1, wherein the sliding assembly comprises the mover and a sliding table, and the mover and the sliding table are integrally potted together.

3. A linear motor with an integrated mover and sliding table according to claim 1, wherein the magnetic rail is fixedly connected to the base.

4. A linear motor with an integrated mover and sliding table according to claim 1, wherein the outer side wall of the base is provided with a groove, and the guide rail is embedded in the groove.

5. A linear motor with an integrated mover and sliding table according to claim 1, wherein the sliding assembly is provided with first protrusions on both sides facing the base, a mounting groove is provided in the first protrusion, the mounting grooves on both sides are all embedded with the sliding structure, the outer side walls of both sides of the base are all provided with the guide rail, and the two sliding structures correspond to the two guide rails respectively.

6. A linear motor with an integrated mover and sliding table according to claim 1, wherein the sliding structure comprises:
a recirculator, the recirculator is provided with a plurality of rolling balls, the guide rail is provided with a sliding groove, and the plurality of rolling balls are in rolling connection with the sliding groove.

7. A linear motor with an integrated mover and sliding table according to claim 5, wherein an oil cup communicated with the mounting groove is provided on a side wall of the sliding assembly, so as to lubricate a sliding between the sliding structure and the guide rail.

8. A linear motor with an integrated mover and sliding table according to claim 1, wherein a connector for connecting a power cable is further provided on a side wall of the sliding assembly, and the connector is connected to the mover.

9. A linear motor with an integrated mover and sliding table according to claim 1, wherein the sliding assembly comprises the mover and a sliding table, an accommodation groove is provided on one side of the sliding table facing the base, and the mover is located in the accommodation groove.

10. A linear motor with an integrated mover and sliding table according to claim 9, wherein a heat dissipation fin is provided on a side wall of the sliding table located around the accommodation groove, or the sliding table is provided with a heat dissipation hole located around the accommodation groove.

11. A linear motor with an integrated mover and sliding table according to claim 1, further comprising two end covers and a cover plate, front and rear ends of the base are each provided with the end cover, the end cover is fixedly connected to the base, the cover plate is connected between the two end covers, a sliding cavity is formed between the cover plate and the base, and the sliding assembly is slidably provided in the sliding cavity.

12. A linear motor with an integrated mover and sliding table according to claim 11, wherein the sliding assembly is provided with a second protrusion and two limiting platforms, which are away from the base, the two limiting platforms are respectively provided on two sides of the second protrusion, a limiting groove is formed between the two limiting platforms and the second protrusion, limiting plates extend downward from two sides of the cover plate, and the two limiting plates are respectively provided in the two limiting grooves, and the limiting plates and the limiting grooves slide relative to each other.

13. A linear motor with an integrated mover and sliding table according to claim 11, wherein a cushioning pad is further provided on an inner side of the end cover.

14. A linear motor with an integrated mover and sliding table according to claim 1, wherein a photoelectric sensing sheet is further provided on a side wall of the sliding assembly, a photoelectric sensor cooperated with the photoelectric sensing sheet is provided on a side wall of the base, and the photoelectric sensing sheet corresponds to the photoelectric sensor in position.

15. A linear motor with an integrated mover and sliding table according to claim 1, wherein a linear encoder is further provided on a side wall of the sliding assembly, and a grid scale cooperated with the linear encoder is provided on a side wall of the base.
